Europäisches Patentamt

**European Patent Office**

**Office européen des brevets**

(19)

(11) Veröffentlichungsnummer : **0 114 147**
**B1**

(12) **EUROPÄISCHE PATENTSCHRIFT**

(45) Veröffentlichungstag der Patentschrift :
03.12.86

(51) Int. Cl.⁴ : **B 62 D 43/00**, B 60 B 29/00

(21) Anmeldenummer : **84810003.8**

(22) Anmeldetag : **05.01.84**

(54) **Vorrichtung zur Erleichterung des Radwechsels.**

(30) Priorität : **13.01.83 CH 183/83**

(43) Veröffentlichungstag der Anmeldung :
**25.07.84 Patentblatt 84/30**

(45) Bekanntmachung des Hinweises auf die Patenterteilung : **03.12.86 Patentblatt 86/49**

(84) Benannte Vertragsstaaten :
**AT CH DE FR GB IT LI SE**

(56) Entgegenhaltungen :
**DE-A- 3 118 504**
**DE-B- 1 480 858**
**DE-C-   912 664**
**US-A- 2 516 260**
**US-A- 3 850 321**

(73) Patentinhaber : **Liebermann, Hanne**
**Erbstrasse 2a**
**CH-8700 Küsnacht (CH)**

(72) Erfinder : **Liebermann, Hanne**
**Erbstrasse 2a**
**CH-8700 Küsnacht (CH)**

(74) Vertreter : **White, William et al**
**PATENTANWALTS-BUREAU ISLER AG Postfach 6940**
**Walchestrasse 23**
**CH-8023 Zürich (CH)**

## Beschreibung

Die vorliegende Erfindung betrifft eine Vorrichtung zur Erleichterung des Radwechsels gemäss dem Oberbegriff des unabhängigen Patentanspruchs 1.

Wenn bei einem Lastkraftwagen im Gelände ein Rad zu wechseln ist, führt dies zufolge des hohen Gewichtes der Räder, die in einem Gewichtsbereich von 150-180 kg liegen können, zu Schwierigkeiten. Einerseits sind die Aufbewahrungsstellen für die Ersatzräder ungünstig angeordnet und verlangen schon eine grosse Kraftanstrengung des Fahrers beim Hervorholen der Räder und anderseits muss der Fahrer dann entweder mit dem Wagenheber die Höhe der Achse auf die Nabe einstellen, was sehr zeitraubend ist, oder er muss das Rad wiederum auf die richtige Höhe hochheben, um die Bolzen auf die entsprechenden Bohrungen auszurichten. Schliesslich muss auch das defekte Rad wieder am Ort des Ersatzrades befestigt werden.

In der Unfallverhütungsvorschrift der BRD vom 1.4.1980 wird unter dem Kapitel 22.0 « Fahrzeuge » im Abschnitt 5 festgehalten : « Ersatzräder müssen von nur einem Beschäftigten entnommen und wieder angebracht werden können ». Für das gelegentliche Heben von Gewichten wird die maximale Hebe- und Tragkraft für Männer mit 50 kg angegeben. Durch diese Vorschrift und Beschränkung wird für Lastkraftwagenfahrer indirekt ein Hilfsmittel für das Wechseln der Räder gefordert.

In der DE-A 3 118 504 wird eine Vorrichtung gemäß dem Oberbegriff des Anspruchs 1 vorgestellt, mit der schwere Ersatzräder transportiert und montiert werden können. Das Ersatzrad ist demgemäss in einen mittels Rollen verfahrbaren Radkorb eingehängt. Etwa auf halber Höhe des Ersatzrades sind beidseitig am Radkorb angeordnete Haken zum Einhängen in Bügelkonsolen am Fahrzeug vorhanden. Damit kann ein Ersatzrad ohne Kraftanstrengung von einer horizontalen Lage unter dem Fahrzeugboden in eine vertikale Lage gebracht werden und durch die vorhandenen Rollen kann der Radkorb im Sackkarrenprinzip zur Reparaturstelle gefahren werden. Zum Montieren des Rades müssen aber Radnabe und Radbefestigung in mühsamer Weise auf gleiche Höhe gebracht werden, weil der Wagenheber nur selten so nahe beim defekten Rad unterstellt werden kann, dass ein gleichzeitiges Beobachten der gegenseitigen Lage möglich ist. Ausserdem kann mit dieser Vorrichtung das Rad kaum ohne erhebliche Mühe an Ort rotiert werden, um Bolzen und Löcher aufeinander auszurichten.

Es besteht daher immer noch ein Bedarf an einem Hilfsmittel, mit dem ein defektes Rad ohne Kraftanstrengung durch ein Ersatzrad ersetzt werden kann. Demgemäss besteht somit die Aufgabe der Erfindung darin, ein solches Hilfsmittel zu schaffen. Erfindungsgemäss wird dies durch die Merkmale im kennzeichnenden Teil des unabhängigen Patentanspruchs 1 erreicht.

DE-C 912 664 zeigt einen weiteren fahrbaren Reserveradhalter, der jedoch zum Befestigen unter dem Fahrzeug eine kippbare Rampe hochgeschoben werden muss. Die Rampe wird anschliessend durch eine Winde in eine horizontale Lage hochgezogen. Diese Vorrichtung weist dieselben Nachteile wie die zuvor erwähnte auf, wobei allerdings das Unterbringen unter dem Fahrzeug mehr Kraft erfordert.

Aus der US-A 3 850 321 ist ein Servicewagen für Räder eines Kraftfahrzeuges bekannt, der Führungsteile aufweist, an denen Rollelemente drehbar gelagert sind. An den Führungsteilen sind zwei als Walzen ausgebildete Radtragelemente geführt. Zum Anheben und Absenken der durch ein Rad belasteten Walzen ist eine hydraulische Hebevorrichtung vorgesehen. Dieser Servicewagen ist für den Werkstattbetrieb zum Service der Felgen vorgesehen. Er könnte nicht als Halter für ein Ersatzrad eingesetzt werden, weil er dazu zu sperrig ist.

Weitere Vorschläge für Servicewagen mit anhebbarem Radträger sind aus US-A 2 516 260 und aus DE-B 1 480 858 bekannt.

Ausführungsbeispiele der Erfindung werden nachfolgend anhand der Zeichnung erläutert. Es zeigen :

Figur 1 einen Aufriss einer ersten Ausführungsart mit in einem Kasten untergebrachten Rad,

Figur 2 eine perspektivische Ansicht der Vorrichtung nach Fig. 1 in einer am Fahrzeug eingehängten Lage und in verkleinertem Massstab,

Figur 3 eine Ansicht eines unter dem Fahrzeug in Aufbewahrungslage angeordneten Rades,

Figur 4 einen Aufriss einer zweiten Ausführungsform einer Vorrichtung nach der Erfindung,

Figur 5 einen Seitenriss der Vorrichtung nach Fig. 4, und

Figur 6 eine Ansicht ähnlich Fig. 3 eines unter dem Fahrzeug angeordneten Rades.

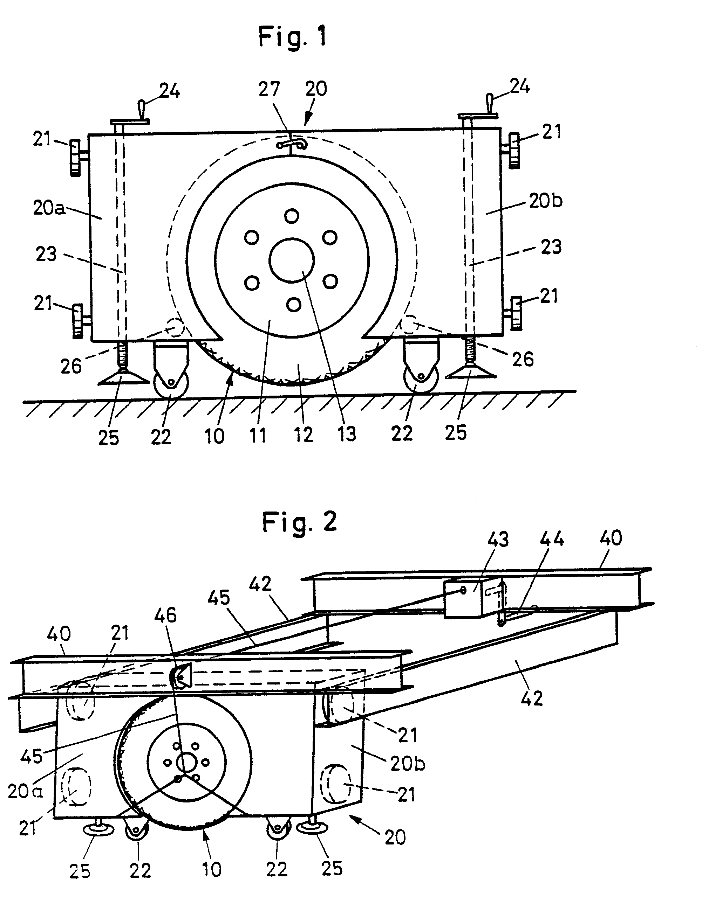

Das Ersatzrad 10 ist gemäss Fig. 1 in einem Radhalter 20 untergebracht. Der Radhalter 20 ist als Kasten ausgebildet und mit vier seitlichen Rollen 21 und mit zwei schwenkbaren oder drehbaren Laufrädern 22 versehen. Ausserdem sind beidseits je eine Gewindespindel 23 mit Handrad 24 und Standplatte 25 vorhanden. Das Rad 10 besteht aus Felge 11 und darauf montiertem Pneu 12. Der Radhalter 20 ist beidseits im Bereich der Nabe 13 und möglicherweise auch auf der ganzen Fläche der Felge 11 und allenfalls noch auf einem Teil des Pneus 12 offen oder durch Deckel (nicht dargestellt) verschliessbar. Damit kann das Rad 10 im Radhalter 20 bis vor die Bolzenschrauben einer Bremstrommel an einem Achsschenkel verfahren, in der Höhe eingestellt und befestigt werden. Der Radhalter 20 ist vorteilhafterweise zweigeteilt und weist die beiden Schalenhälften 20a und 20b auf. Ein Befestigungshaken 27 auf der einen Seite und bekannte Einhängemittel auf der Hinterseite gestatten, den Radhalter 20 von einem montierten Rad zu entfernen. Im Radkasten befinden sich noch zwei rotierbare Walzen 26 zur drehbaren Unterstützung des Rades 10.

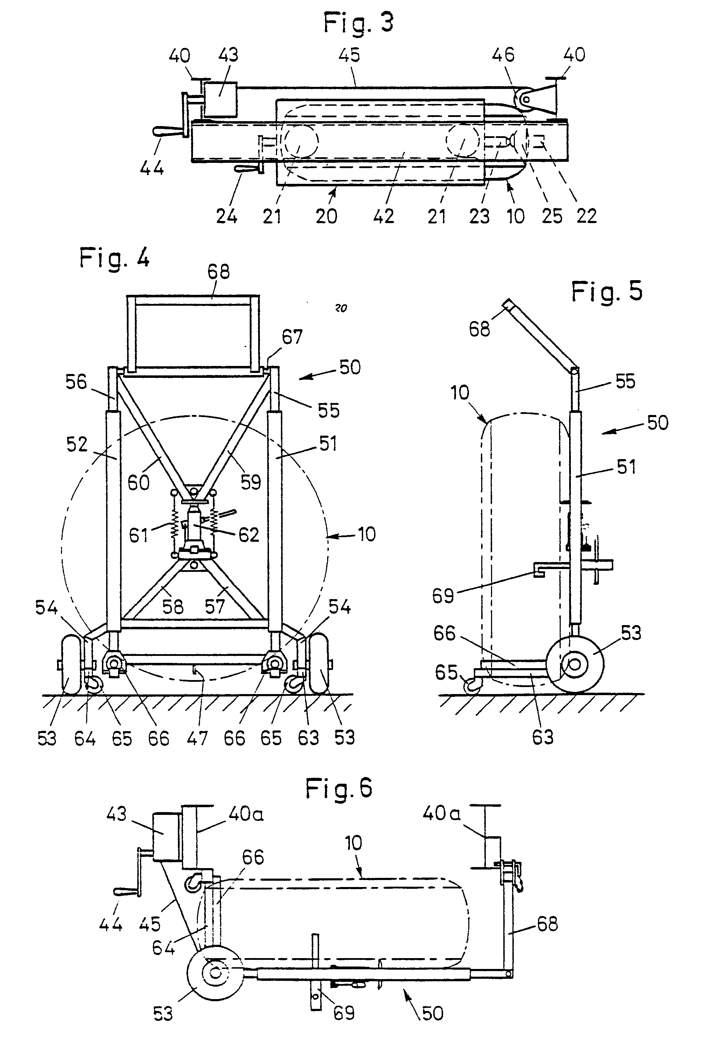

Unter dem Boden eines Kraftfahrzeuges 40 sind zwei parallele horizontale Schienen 42 angeordnet, wie insbesondere aus Fig. 2 und 3 deutlich ersichtlich ist. In die beiden Schienen 42 werden die oberen Rollen 21 eingesetzt und damit kann der Radhalter 20 horizontal verschoben werden. Bei Nichtgebrauch liegt somit das Rad 10 mit dem Radhalter 20 horizontal unter dem Fahrzeug 40. Zum Radwechsel wird der Radhalter 20 aus den Schienen 42 herausgezogen und die Laufräder 22 werden auf den Boden abgesenkt, wie Fig. 2 zeigt. Selbstverständlich müssen die Schienen 42 einen Abstand vom Boden aufweisen, der höchstens gleich oder kleiner ist als der Abstand zwischen den Laufrädern 22 und dem davon entfernten oberen Paar Rollen 21, so dass der Radhalter 20 schon auf dem Boden abgestützt ist, wenn die oberen Rollen 21 noch in den Schienen 42 aufliegen.

Nach dem Abstellen der Laufräder 22 auf dem Boden kann der Radhalter 20 vertikal gestellt werden, indem die beiden Rollen 21 aus den Schienen ausgehängt werden. Auf den zwei Laufrädern 22 stehend, kann der Radhalter 20 in jede Richtung verfahren werden.

Vor der entsprechenden Stelle angekommen, werden die Standplatten 25 mittels der Handräder 24 bis zum Boden hintergeschraubt. Durch Weiterdrehen der Handräder 24 heben die beiden Spindeln 23 Radhalter 20 in die Höhe, bis die Felge 11 auf der Höhe der Befestigungselemente liegt und das Rad 10 befestigt werden kann.

Zum Anheben und Absenken des Radhalters 20 ist am Fahrzeug 40 gemäss Fig. 2 und 3 eine Haspel oder Handwinde 43 mit einer Handkurbel 44 angeordnet. Ein am Radhalter 20 an der rollelementseitigen Partie befestigtes Seil 45 ist über eine am Fahrzeug 40 drehbar gelagerte Rolle 46 zur Handwinde 43 verlegt. Damit kann das Rad in die horizontale Lage hochgezogen und von dieser Lage in die vertikale Lage abgesenkt werden, wobei ein einzelner Beschäftigter diese Arbeit verrichten kann. Auf den Rollen 22 kann das Rad 10 nach Lösen des Seils 45 zur Reparaturstelle verfahren und dort mittels der Gewindespindeln 23 auf die richtige Höhe eingestellt werden. Die korrekte Winkellage kann durch Drehen des Rades 10 auf den Walzen 26 ebenso ohne Kraftanstrengung erfolgen. Nachteilig ist lediglich, dass das defekte Rad ohne Hilfsmittel abgenommen werden muss, wodurch von einem Beschäftigten trotzdem noch eine gewisse Hebearbeit zu vollbringen ist.

Im Ausführungsbeispiel nach Fig. 4 bis 6 kann auch diese Arbeit erleichtert werden. Der Radhalter 50 besteht aus zwei Führungsstangen 51. 52 auf einem Rollgestell 54, an dem seitlich zwei Rollelemente 53 drehbar gelagert sind. Die Führungsstangen 51, 52 sind als Rohre ausgebildet und dienen der Führung von Verschiebestangen 55, 56. Am Rollgestell 54 sind zwei nach oben konvergierende untere Stützen 57, 58 und am oberen freien Ende der Verschiebestangen 55, 60, sind zwei nach unten konvergierende obere Stützen 59, 60 angeordnet. An den sich mittig gegenüberstehenden Enden dieser Stützen 57-60 sind einerseits zwei Zugfedern 61 und anderseits eine hydraulische Pumpe 62 angebracht.

Am Rollgestell 54 sind wie aus Fig. 5 und 6 ersichtlich, zwei Rollenträger 63, 64 befestigt, die senkrecht auf der durch die Führungsstangen 51, 52 bestimmten Ebene stehen und an ihren freien Enden je eine Schwenkrolle 65 tragen. Zusammen mit den Rollelementen 53 bilden diese Schwenkrollen 65 eine Halterung für ein freies Aufstellen des Radhalters 50.

An den unteren Enden der Verschiebestangen 55, 56 unterhalb der Führungsstangen 51, 52 befinden sich zwei parallel zu den Rollenträgern 63, 64 angeordnete rotierbare Walzen 66 als Auflager für ein Rad. An den oberen Enden der Verschiebestangen 55, 56 ist eine Querstange 67 starr befestigt und diese Querstange 67 dient der drehbaren Lagerung eines Handgriffes 68.

Wie Fig. 6 zeigt, ist der Radhalter 50 mit dem Handgriff 68 an den Trägern 40a des Fahrgestellrahmens eingehängt und in üblicher Weise mittels eines an einer Kette befestigten Sicherungsstiftes gesichert. Auf der anderen Seite des Rahmens befindet sich wieder eine Handwinde 43 mit einer Handkurbel 44, mit der ein an einem Haken 47 eingehängtes Seil 45 (Fig. 6) aufgehaspelt werden kann. Damit wird der Radhalter 50 unter dem Fahrzeug hindurchgezogen und oben gehalten. Mittels Haltestiften 69 kann das Rad 10 am Radhalter 50 gegen eine seitliche Verschiebung gesichert werden.

Zum Radwechsel wird also zuerst die Handwinde 43 betätigt und damit der Radhalter 50 gemäss Fig. 5 auf den Boden gestellt. Nach Lösen des Seils kann das Ersatzrad ähnlich wie mit einem Sackroller zur Reparaturstelle gefahren werden. Dort wird zuerst das heile Rad seitlich weggestossen und dann der Radhalter 50 unter das defekte Rad gestellt. Mit der hydraulischen Pumpe 62 werden die Walzen 66 hochgehoben bis sie unter dem defekten Rad anliegen. Darauf kann das Rad losgeschraubt werden und durch Druckentlastung an der Pumpe senken sich die Walzen 66 bis zum Boden ab. Das defekte Rad kann zur Seite gerollt und nun kann das heile Rad auf die Walzen 66 gerollt werden.

In umgekehrter Reihenfolge wird nun dieses Rad mittels der Pumpe 62 hochgehoben und befestigt. Nach herunterlassen der Walze 66 wird das defekte Rad auf den Radhalter gerollt und mittels diesem zur Aufbewahrungsstelle verfahren. Nach Einhängen des Seils 45 am Haken 47 und des handgriffes an einer entsprechenden Stelle kann der Radhalter 50 mittels der Handkurbel 43 hochgezogen werden.

Damit braucht sich ein Beschäftigter in keiner Phase der Arbeit über seine Kraftverhältnisse hinaus anzustrengen, um ein defektes Rad an einem Fahrzeug auszuwechseln.

## Patentansprüche

1. Vorrichtung zur Erleichterung des Radwechsels bei Strassenfahrzeugen, insbesondere für Räder mit einem Gewicht über 50 kg, mit einem mit bodenseitig angeordneten Rollelementen (22, 53) zum Verfahren versehenen Radhalter (20, 50), der die Halterung für ein Ersatzrad (10) des Fahrzeuges bildet, wobei das Ersatzrad (10) bei Nichtgebrauch horizontal unter dem Fahrzeugboden (40) liegt, und wobei der Radhalter (20, 50) zwei Führungsteile (20a, 20b, 51, 52) aufweist, an denen die Rollelemente (22, 53) drehbar gelagert sind, und die für die Halterung von wenigstens einem Radtragelement (26, 66) dienen, dadurch gekennzeichnet, dass Mittel (23, 61, 62) zum Anheben und Absenken des durch ein Rad (10) belasteten Radtragelementes (26, 66) vorhanden sind, und dass auf einer Seite des Fahrzeugbodens (40) ein Befestigungsmittel zur lösbaren Halterung der den Rollelementen abgewandten Partie (21, 68) des Radhalters (20, 50) und auf der anderen Seite des Fahrzeugbodens (40) ein an der rollelementseitigen Partie des Radhalters (20, 50) angreifendes Hebemittel (43, 44, 45) zum Anheben und Absenken dieser Partie angeordnet sind.

2. Vorrichtung nach Patentanspruch 1, dadurch gekennzeichnet, dass die Rollelemente (22, 53) seitlich ausserhalb des Radtragelementes (26, 66) angeordnet sind.

3. Vorrichtung nach Patentanspruch 1 oder 2, dadurch gekennzeichnet, dass als Radtragelement (66) zwei von Führungsstangen (51, 52) rechtwinklig abstehende, um ihre Längsachse rotierbare Walzen (66) sind.

4. Vorrichtung nach Patentanspruch 3, dadurch gekennzeichnet, dass die Führungsstangen (51, 52) rohrförmig sind, dass die Walzen (66) an in den Führungsstangen längsverschieblich geführten Verschiebestangen (55, 56) drehbar gehaltert sind, die auf der den Rollenelementen abgewandten Seite durch eine Querstange (67) miteinander starr verbunden sind, und dass an den Führungsstangen (51, 52) einerseits und an den den Rollenelementen abgewandten Partien der Verschiebestangen (55, 56) anderseits die Mittel (61, 62) zum Anheben und Absenken des Radtragelementes befestigt sind, um die Verschiebestangen (55, 56) bezüglich der Führungsstangen (51, 52) zu verschieben.

5. Vorrichtung nach Patentanspruch 4, dadurch gekennzeichnet, dass die Mittel zur Verschiebung der Verschiebestangen (55, 56) in eine untere Endlage wenigstens ein Federelement (61) und zur Verschiebung in eine obere Endlage eine hydraulische Pumpe (62) sind.

6. Vorrichtung nach Patentanspruch 5, dadurch gekennzeichnet, dass an der rollelementseitigen Partie der Führungsstangen (51, 52) zwei nach oben konvergierende untere Stützen (57, 58) und an der den Rollelementen abgewandten Partie der Verschiebestangen (55, 56) zwei nach unten konvergierende obere Stützen (59, 60) befestigt sind, und dass die Federelemente (61) und die Pumpe (62) zwischen sich gegenüberstehenden Enden der vier Stützen (57-60) angeordnet sind.

7. Vorrichtung nach Patentanspruch 6, dadurch gekennzeichnet, dass die Querstange (67) die Lagerachse für einen drehbaren Handgriff (68) bildet.

8. Vorrichtung nach einem der Patentansprüche 3 bis 7, dadurch gekennzeichnet, dass die Lagerachsen für die rotierbaren Walzen (66) klappbar an den Verschiebestangen (55, 56) befestigt sind.

9. Vorrichtung nach einem der Patentansprüche 1 bis 8, dadurch gekennzeichnet, dass an den Führungsstangen (51, 52) starr befestigte Rollenträger (63, 64) angeordnet sind, die parallel zum Radtragelement (66) verlaufen und an ihren freien Enden mit Schwenkrollen (65) versehen sind.

10. Vorrichtung nach einem der Patentansprüche 1 bis 9, dadurch gekennzeichnet, dass das Hebemittel zum Anheben und Absenken der rollelementseitigen Partie eine am Fahrzeug (40) befestigte Haspel (43) ist, um ein an der rollelementseitigen Partie der Führungsstangen (51, 52) oder Verschiebestangen (55, 56) befestigtes Zugseil (45) auf- und abzuwickeln.

## Claims

1. Device for facilitating the changing of a wheel on road vehicles, especially for wheels having a weight exceeding 50 kg, comprising a wheel holder (20, 50) equipped with roller elements (22, 53) at the bottom end for traversing, which holder constitutes the mounting for a replacement wheel (10) of the vehicle, the replacement wheel (10) lying horizontally beneath the vehicle floor (40) when not in use and the wheel holder (20, 50) possessing two guide components (20a, 20b, 51, 52), on which the roller elements (22, 53) are rotatably journalled and which serve for the mounting of at least one wheel support element (26, 66), characterized in that means (23, 61, 62) for raising and lowering the wheel support element (26, 66), loaded by a wheel (10), are provided, and that, on one side of the vehicle floor (40), a fixing means for the releasable mounting of the part (21, 68) of the wheel holder (20, 50) remote from the roller elements is disposed and, on the other side of the vehicle floor (40), a lifting means (43, 44, 45) for raising and lowering this part and acting on the part of the wheel holder (20, 50) nearest to the roller elements is disposed.

2. Device according to Claim 1, characterized in that the roller elements (22, 53) are disposed laterally outside the wheel support element (26, 66).

3. Device according to Claim 1 or 2, characterized in that two rollers (66), rotatable about

their longitudinal axis and projecting perpendicularly from guide rods (51, 52), are provided as wheel support element (66).

4. Device according to Claim 3, characterized in that the guide rods (51, 52) are tubular, that the rollers (66) are rotatably journalled on slide rods (55, 56), longitudinally slidably guided in the guide rods, which slide rods are rigidly connected with one another by a transverse rod (67) on the side remote from the roller elements, and that, on the guide rods (51, 52) on the one hand and on the parts of the slide rods (55, 56) remote from the roller elements on the other hand, the means (61, 62) for raising and lowering the wheel support element are fixed, in order to displace the slide rods (55, 56) relative to the guide rods (51, 52).

5. Device according to Claim 4, characterized in that the means for displacing the slide rods (55, 56) into a lower limiting position are at least one spring element (61) and, for displacing into an upper limiting position, are a hydraulic pump (62).

6. Device according to Claim 5, characterized in that, on the part of the guide rods (51, 52) nearest to the roller elements, two upwardly converging lower supports (57, 58) are fixed and, on the part of the slide rods (55, 56) remote from the roller elements, two downwardly converging, upper supports (59, 60) are fixed, and that the spring elements (61) and the pump (62) are disposed between opposite ends of the four supports (57-60).

7. Device according to Claim 6, characterized in that the transverse rod (67) constitutes the bearing axis for a rotatable handle (68).

8. Device according to one of Claims 3 to 7, characterized in that the bearing axes for the rotatable rollers (66) are attached in articulated manner to the slide rods (55, 56).

9. Device according to one of Claims 1 to 8, characterized in that roller supports (63, 64), rigidly fixed to the guide rods (51, 52) are provided, which extend parallel to the wheel support element (66) and are equipped, at their free ends, with pivotal rollers (65).

10. Device according to one of Claims 1 to 9, characterized in that the lifting means for raising and lowering the part nearest to the roller elements is a winch (43) fixed to the vehicle (40), for reeling and unreeling a tension cable (45), fixed to the part of the guide rods (51, 52) nearest to the roller elements or slide rods (55, 56).

**Revendications**

1. Dispositif pour faciliter le changement des roues de véhicules routiers, en particulier de roues dont le poids excède 50 kg, présentant un porte-roue (20, 50) qui est muni d'organes de roulement (22, 53) disposés du côté sol en vue de son déplacement, et qui forme le support pour une roue de secours (10) du véhicule, cette roue de secours (10) occupant une position horizontale au-dessous du plancher (40) du véhicule en cas de non-utilisation, et le porte-roue (20, 50) comportant deux parties de guidage (20a, 20b, 51, 52) sur lesquelles les organes de roulement (22, 53) sont montés rotatifs et qui servent à la retenue d'au moins un élément (26, 66) de support de roue, caractérisé par le fait que des moyens (23, 61, 62) sont présents pour élever et abaisser l'élément (26, 66) de support de roue chargé par une roue (10) ; et par le fait qu'un moyen de fixation est disposé d'un côté du plancher (40) du véhicule, en vue de la retenue amovible de la partie (21, 68) du porte-roue (20, 50) tournée à l'opposé des organes de roulement, tandis que, de l'autre côté du plancher (40) du véhicule, se trouve un moyen de levage (43, 44, 45) en prise avec la partie du porte-roue (20, 50) située du côté des organes de roulement, afin d'élever et d'abaisser cette partie.

2. Dispositif selon la revendication 1, caractérisé par le fait que les organes de roulement (22, 53) sont disposés latéralement à l'extérieur de l'élément (26, 66) de support de roue.

3. Dispositif selon la revendication 1 ou 2, caractérisé par le fait que l'élément (66) de support de roue est constitué par deux rouleaux (66) qui peuvent tourner autour de leur axe longitudinal et font saillie, à angle droit, au-delà de tiges de guidage (51, 52).

4. Dispositif selon la revendication 3, caractérisé par le fait que les tiges de guidage (51, 52) sont tubulaires ; par le fait que les rouleaux (66) sont retenus à rotation sur des tiges télescopiques (55, 56) qui peuvent coulisser longitudinalement dans les tiges de guidage et sont reliées rigidement l'une à l'autre, par l'intermédiaire d'une tige d'entretoisement (67), du côté tourné à l'opposé des organes de roulement ; et par le fait que les moyens (61, 62) pour élever et abaisser l'élément de support de roue sont fixés d'une part aux tiges de guidage (51, 52) et, d'autre part, aux parties des tiges télescopiques (55, 56) qui sont tournées à l'opposé des organes de roulement, de manière à faire coulisser les tiges télescopiques (55, 56) par rapport aux tiges de guidage (51, 52).

5. Dispositif selon la revendication 4, caractérisé par le fait que les moyens pour faire coulisser les tiges télescopiques (55, 56) à une position extrême inférieure et pour les faire coulisser à une position extrême supérieure consistent, respectivement, en au moins un élément élastique (61) et en une pompe hydraulique (62).

6. Dispositif selon la revendication 5, caractérisé par le fait que deux soutiens inférieurs (57, 58) convergeant vers le haut sont fixés à la partie des tiges de guidage (51, 52) située du côté des organes de roulement, deux soutiens supérieurs (59, 60) convergeant vers le bas étant fixés à la partie des tiges télescopiques (55, 56) tournée à l'opposé des organes de roulement ; et par le fait que les éléments élastiques (61) et la pompe (62) sont intercalés entre des extrémités des quatre soutiens (57-60) disposées mutuellement en regard.

7. Dispositif selon la revendication 6, caractérisé par le fait que la tige d'entretoisement (67) forme l'axe de portée d'une poignée rotative (68).

8. Dispositif selon l'une des revendications 3 à 7, caractérisé par le fait que les axes de portée des rouleaux rotatifs (66) sont fixés aux tiges télescopiques (55, 56) avec faculté de rabat.

9. Dispositif selon l'une des revendications 1 à 8, caractérisé par le fait que des porte-galet (63, 64), fixés rigidement aux tiges de guidage (51, 52), s'étendent parallèlement à l'élément (66) de support de roue et sont munis à leurs extrémités libres de galets pivotants (65).

10. Dispositif selon l'une des revendications 1 à 9, caractérisé par le fait que le moyen de levage pour élever et abaisser la partie située du côté des organes de roulement consiste en un treuil (43) fixé au véhicule (40), de manière à enrouler et à dérouler un câble de traction (45) fixé à la partie des tiges de guidage (51, 52) ou des tiges télescopiques (55, 56) qui est située du côté des organes de roulement.

# Fig. 1

# Fig. 2

0 114 147

Fig. 3

Fig. 4

Fig. 5

Fig. 6